# EUROPÄISCHE PATENTANMELDUNG

(11) **EP 2 194 421 A1**
(43) Veröffentlichungstag der Anmeldung: **09.06.2010**
(21) Anmeldenummer: 10002044.5
(22) Anmeldetag: 13.05.2005
(51) Int. Cl.: G02C 5/22, G02C 5/16

(54) **Brille**

(30) Priorität: 13.05.2004 DE 102004023839
(62) Teilanmeldung aus: 05753628.6
(71) Anmelder: ic! berlin brillenproduktions GmbH, 10405 Berlin (DE)
(72) Erfinder: Habermann, Gert, 81679 München (DE)
(74) Vertreter: Hruschka, Jürgen

(57) **Zusammenfassung**

Die vorliegende Erfindung betrifft ein Brillengestell mit links und rechts je einem Bügel (1) und mit einer Fassung (7), die links und rechts je ein Anschlusselement (8) aufweist, dessen bügelseitiges Ende in Richtung des Bügels (1) im ausgeklappten Zustand weist, wobei an dem Anschlusselement (8) Gelenkelemente angeordnet sind, welche mit an dem fassungsseitigen Ende des Bügels (1) angeordneten Gelenkelementen unter Ausbildung eines Drehgelenks zusammenwirken, wobei das Anschlusselement (8) aus Flachmetall hergestellt ist und die Gelenkelemente als Ösen (9) ausgebildet sind, die aus dem Flachmetall gebogen sind, wobei der Bügel (1) an seinem fassungsseitigen Ende drei Blattfedern (2,3,4) aus Flachmetall aufweist und die Gelenkelemente des Bügels (1) als an den äußeren Blattfedern (2,3) angeordnete Zapfen (6) ausgebildet sind, die in die Ösen (9) an dem Anschlusselement (8) eingreifen derart, dass die mittlere Blattfeder (4) im ausgeklappten Zustand des Bügels an der dem Brillenträger abgewandten Fläche des Anschlusselements (8) zum Anliegen kommt, und wobei die äußeren Blattfedern (2,3) so ausgebildet sind, dass sie in Richtung der Gelenkachse des Drehgelenks jeweils eine Federkraft ausüben, und die von einer Blattfeder (2 oder 3) ausgeübte Federkraft von der anderen Blattfeder (3 oder 2) weg wirkt.

## Beschreibung

Die vorliegende Erfindung betrifft eine Brille bzw. ein Brillengestell, das ohne Schrauben im Gelenkmechanismus auskommt.

Aus dem Stand der Technik sind verschiedene Varianten von Gelenkmechanismen bei Brillengestellen bekannt. Die gängigste Variante basiert auf einem Scharniermechanismus, bei dem am Rahmen bzw. der Fassung der Brillengläser Stifte angeordnet sind, die mit einem entsprechenden Gelenkteil, welches am fassungsseitigen Ende des Bügels angeordnet ist, kooperieren, indem beide Teile ineinander geschoben werden und mittels Spezialschrauben drehbar verbunden werden. Bei den meisten Brillenfassungen, insbesondere bei denjenigen, welche mit Korrekturgläsern verwendet werden sollen, erfolgt das Öffnen und Schließen der Fassungen zum Einsetzen oder Wechseln der Brillengläser mittels eines sogenannten Schließblocks. Denkbar ist es auch, dass die Gläser unmittelbar an einem Rahmen befestigt werden, indem Schrauben direkt in das Glas geschraubt werden. Bei rahmenlosen Brillen werden die Bügel direkt über ein Ansatzstück mit den Gläsern verschraubt.

Da das Drehgelenk während der Lebensdauer der Brille dynamisch sehr stark beansprucht wird, haben mehrere Lösungen der Einfachheit wegen auf ein herkömmliches Drehgelenk verzichtet.

So schlägt die US-Patentschrift Nr. 3,155,982 eine Brille vor, bei welcher die Brillenbügel direkt mit dem vorderen, die Gläser beinhaltenden Fassungsteil zusammenwirken. Hierzu teilt sich das Ende des fassungsseitigen Endes des Bügels in drei Blattfedem auf, wobei die mittlere Blattfeder an der Außenkante des Fassungsteils anliegt, während die beiden äußeren Blattfedem mit an ihren Enden geformten Haken in Öffnungen eingreifen, die in der Nähe der Außenkante in dem Hauptteil angeordnet sind. Ein Nachteil der in der US 3,155,982 beschriebenen Gelenkkonstruktion besteht darin, dass die Brillenbügel nur sehr locker mit der Fassung verbunden sind, so dass es leicht passieren kann, dass sich die Brillenbügel von der Fassung lösen, z.B. wenn die Brille auf den Boden fällt.

Eine weitere Brillengelenklösung, die ebenfalls mit einem mit drei Blattfedern versehenen Brillenbügel arbeitet, wird in der europäischen Patentschrift Nr. 0 863 424 B1 von Haffmans und Gottschling vorgeschlagen. An der Fassung ist links und rechts jeweils ein Anschlusselement vorgesehen, welches eine obere und eine untere Aussparung aufweist, die eine senkrecht zur Richtung des ausgeklappten Bügels verlaufende Gelenkachse bilden. Im ausgeklappten Zustand der Bügel durchgreifen die beiden äußeren Blattfedem der Bügel von der dem Gesicht des Brillenträgers zugewandten Fläche des Anschlusselements aus mit an ihren freien Enden vorgesehenen Biegungen die Aussparungen in dem Anschlusselement und kommen dann an der dem Gesicht des Brillenträgers abgewandten Fläche des Anschlusselements zum Anliegen, während die mittlere Blattfeder in ihrer ganzen Länge an der gegenüberliegenden Fläche des Anschlusselements anliegt. Beim Ein- bzw. Ausklappen des Bügels bewegt sich bzw. wandert die Drehachse des so ausgebildeten Drehgelenks zwangsläufig in Längsrichtung des Bügels, da keine stationär zueinander fixierten Teile im Drehgelenk vorhanden sind. Vielmehr bedingt die durch die in den Aussparungen aufgenommenen Biegungen ausgebildete "schwimmende" Lagerung des Bügels einen notwendigen Freiheitsgrad für die Bügelschwenkbewegungen. Das Anschlusselement ist dabei zweigeteilt, so dass ein leichtes Auswechseln der Gläser ermöglicht wird. Zur Stabilisierung kann eine Schließspange verwendet werden, die auf das geteilte Anschlusselement aufschiebbar ist. Dieser Mechanismus ist jedoch mit dem Nachteil behaftet, dass sich das Einsetzen der Bügel schwierig gestaltet, da die äußeren Blattfedern und die mittlere Blattfeder an einander gegenüberliegenden Flächen des Anschlusselements vorbei geführt werden müssen, wobei entgegen der Federwirkung gearbeitet werden muss und sich die Biegungen der Enden dabei als hinderlich erweisen. Darüber hinaus besteht insbesondere bei kleiner Dimensionierung dieses Gelenkes die Gefahr, dass sich der Bügel bereits bei geringer mechanischer Beanspruchung vom Anschlusselement löst.

Aus der WO 98/48313 ist ein Gelenkmechanismus bekannt, bei welchem zwei Finger jeweils an dem gelenkseitigen Enden der Brillenbügel voneinander weg weisend gebogen sind und die gebogenen Enden in Öffnungen drehbar eingreifen, die an einem rahmenseitigen Anschlusselement angeordnet sind. Die gebogenen Enden der Finger werden in diesen Öffnungen auf Grund der geometrischen Verhältnisse verliersicher gehalten. Die Finger sind nicht ausgebildet, um im zusammengebauten Zustand des so ausgebildeten Drehgelenks eine Federkraft auszuüben. Ein solcher Gelenkmechanismus eignet sich jedoch nicht bei flachen Metallbrillen, wie diese beispielsweise aus der EP 0 863 424 B1 bekannt sind.

Ausgehend davon ist es die Aufgabe der vorliegenden Erfindung, ein Brillengestell zu schaffen, welches eine einfache Montage der Bügel ermöglicht und bei dem ein selbsttätiges Lösen der Brillenbügel bei mechanischer Beanspruchung der Brille erschwert wird.

Diese Aufgabe wird durch ein Brillengestell mit den Merkmalen des Anspruchs 1 gelöst.

Vorteilhafte Ausführungsformen der Erfindung ergeben sich aus den Unteransprüchen.

Die Bügel des Brillengestells weisen an ihrem fassungsseitigen Ende in ihrer Längsrichtung drei Finger auf, die derart ausgebildet sind, dass sie im Wesentlichen in Richtung der Gelenkachse eines durch Gelenkelemente des Anschlusselements der Fassung und durch kooperierende Gelenkelemente des Brillenbügels gebildeten Drehgelenks eine Federwirkung ausüben, welche die Gelenkelemente des Bügels und des Anschlusselements in einer drehbaren und verliersicheren Verbindung halten, und dass diese Finger gleichzeitig als Blattfedem ausgebildet sind, deren Blattfläche im ausgeklappten Zustand des Bügels im Wesentlichen in der Ebene des zu dem Bügel gehörenden Anschlusselements verläuft, welches ebenfalls annährend blattförmig geformt ist.

Die Erfindung schlägt hierzu ein Brillengestell mit links und rechts je einem Bügel und mit einer Fassung, die links und rechts je ein Anschlusselement aufweist, dessen bügelseitiges Ende in Richtung des Bügels im ausgeklappten Zustand weist, vor, wobei an dem Anschlusselement Gelenkelemente angeordnet sind, welche mit an dem fassungsseitigen Ende des Bügels angeordneten Gelenkelementen unter Ausbildung eines Drehgelenks zusammenwirken,
- wobei das Anschlusselement aus Flachmetall hergestellt ist und die Gelenkelemente als Ösen ausgebildet sind, die aus dem Flachmetall gebogen sind,
- wobei der Bügel an seinem fassungsseitigen Ende drei Blattfedern aus Flachmetall aufweist und die Gelenkelemente des Bügels als an den äußeren Blattfedem angeordnete Zapfen ausgebildet sind, die in die Ösen an dem Anschlusselement eingreifen derart, dass die mittlere Blattfeder im ausgeklappten Zustand des Bügels an der dem Brillenträger abgewandten Fläche des Anschlusselements zum Anliegen kommt, und
- wobei die äußeren Blattfedem so ausgebildet sind, dass sie in Richtung der Gelenkachse des Drehgelenks jeweils eine Federkraft ausüben, wobei die von einer Blattfeder ausgeübte Federkraft von der anderen Blattfeder weg wirkt.

Durch diese Federkraft werden die Zapfen der äußeren Blattfedem und die Ösen an dem Anschlusselement in einer drehbaren und verliersicheren Verbindung gehalten.

Gemäß der Erfindung sind die Blattfedern folglich derart konstruiert, dass die von zumindest einer Blattfeder ausgeübte Federkraft in umgekehrter Richtung, d.h. von der anderen Blattfeder weg, gerichtet wirkt.

In entsprechender Weise sind daher an dem Anschlusselement Ösen vorgesehen, in die von den Blattfedem nach oben und nach unten abragende Drehzapfen eingreifen. Die Öffnungen der Ösen erstrecken sich dabei im Wesentlichen quer zu der Fläche bzw. Ebene des Anschlusselements. Die Federkraft verhindert ein Lösen der Drehzapfen aus den Ösen unter gleichzeitiger Ausbildung eines einfachen Drehgelenks, d.h. die Federkraft wirkt permanent in Richtung der stationären Gelenkachse des Drehgelenks und stellt so sicher, dass sich die zwischen den Ösen des Anschlusselements und den Zapfen der äußeren Blattfedern des Bügels ausgebildete Gelenkverbindung auch unter entsprechenden mechanischen Belastungen nicht lösen kann. Um die Bügel zu demontieren, genügt es, die äußeren Blattfedem des Bügels entgegen ihrer Federkraft einfach zusammen zu drücken.

Alle Blattfedern laufen zueinander parallel. Der Bügel lässt sich auf einfache Art und Weise zusammen mit den Blattfedem und den Ösen in einem Arbeitsschritt aus einem flachen Rohling ausstanzen.

Während die äußeren der drei Blattfedern die Gelenkelemente in Form von Ösen aufweisen, dient die mittlere Blattfeder der Ausbildung eines Rückfedermechanismus, der ein Aus- bzw. Einklappen des Bügels unterstützt.

Hierzu stützt sich die mittlere Blattfeder an einem Abschnitt des Anschlusselements ab, welcher sich in Richtung zu dem Bügel erstreckt und so ein Widerlager ausbildet.

Gemäß der Erfindung ist es dabei vorgesehen, dass die Länge der Blattfedem und die Länge des Widerlagers so gewählt sind, dass die Federkraft einerseits zur Erreichung einer verliersicheren Verbindung der Gelenkelemente des Bügels und des Anschlusselements ausreicht und andererseits die Blattfederwirkung der mittleren Blattfeder des Bügels ausreicht, um den Bügel in seinem ausgeklappten Zustand zu halten.

Erstreckt sich das blattförmige Widerlager von den Gelenkelementen des Anschlusselements in Richtung zu dem Bügel, ist es dabei so ausgestaltet, dass die äußeren Blattfedem beim Einklappen der Bügel über das Widerlager hinweg laufen können.

Sämtliche Bestandteile des erfindungsgemäßen Brillengestells können in einer bevorzugten Ausführungsform als Stanzteile oder Schnittteile aus Blech hergestellt werden, die noch anschließend in die gewünschte abschließende Form gebogen werden. Denkbar ist auch die Verwendung von Titan als Material der einzelnen Elemente.

Die Erfindung soll nun anhand der in den beiliegenden Zeichnungen dargestellten Ausführungsbeispiele näher beschrieben werden. Es zeigen:
- Fig. 1: eine perspektivische Ansicht eines Bügels für ein Brillengestell nach dem Stand der Technik;
- Fig. 2: eine perspektivische Teilansicht eines Brillengestells in einer ersten Ausführungsform gemäß der Erfindung mit montiertem Bügel im ausgeklappten Zustand;
- Fig. 3: eine perspektivische Teilansicht dieses Brillengestells gemäß der Erfindung mit montiertem Bügel im eingeklappten Zustand;
- Fig. 4: eine perspektivische Teilansicht dieses Brillengestells gemäß der Erfindung mit abmontiertem Bügel;
- Fig. 5: eine perspektivische Teilansicht eines Brillengestells in einer zweiten Ausführungsform gemäß der Erfindung mit montiertem Bügel im ausgeklappten Zustand; und
- Fig. 6: eine perspektivische Teilansicht dieses Brillengestells gemäß der Erfindung mit montiertem Bügel im eingeklappten Zustand.

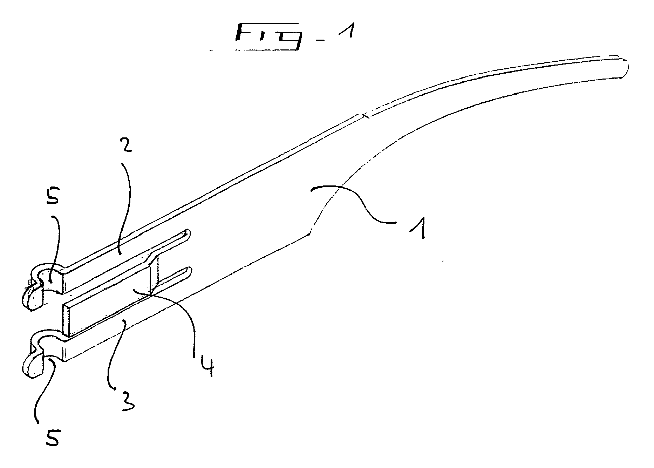

In Fig. 1 ist exemplarisch ein Bügel 1 aus dem Stand der Technik gezeigt, wie er aus der EP 0 863 424 B1 bekannt ist. Der Bügel 1 teilt sich in drei Blattfedem 2, 3 und 4 auf, in zwei äußere Blattfedem 2 und 3 und in eine mittlere Blattfeder 4. Die äußeren Blattfedern 2 und 3 weisen an ihren Enden Biegungen 5 auf, welche in entsprechende, hier nicht näher dargestellte Ausnehmungen eines Anschlusselements einer Fassung eingreifen. Wie vorhergehend erwähnt, liegen dabei die mittlere Blattfeder 4 und die äußeren Blattfedem 2 und 3 auf einander gegenüberliegenden Seiten des Anschlusselements des Brillengestells, was einer einfachen Montage des Bügels entgegensteht.

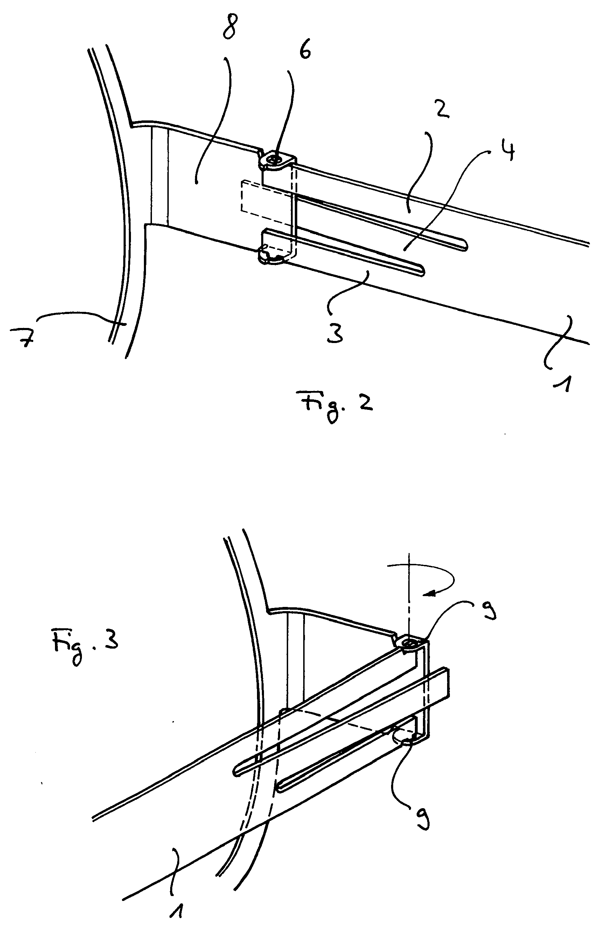

Die Fig. 2 bis 4 zeigen in Teilansicht schematisch einen Bügel 1 und einen Fassung 7 mit einem Anschlusselement 8 gemäß der Erfindung in einer ersten Ausführungsform des Brillengestells.

Der Bügel 1 weist ebenfalls zwei äußere Blattfedern 2 und 3 sowie eine mittlere Blattfeder 4 auf. Die äußeren Blattfedern 2 und 3 tragen an ihren Enden jeweils einen Zapfen bzw. Drehzapfen 6.

Die Fassung 7 weist zu beiden Seiten ein Anschlusselement 8 auf, das im Vergleich zur Länge des Bügels 1 relativ kurz ist und sich in Richtung zu dem Bügel 1 erstreckt.

An dem Anschlusselement 8 sind übereinander liegend unter Ausbildung einer stationären Drehachse Ösen 9 angeordnet. Die Drehzapfen 6 der äußeren Blattfedem 2,3 greifen von innen nach außen, d.h. jeweils voneinander weg gerichtet, in die Ösen 9 an dem Anschlusselement 8 ein und bilden so ein einfaches Drehgelenk aus.

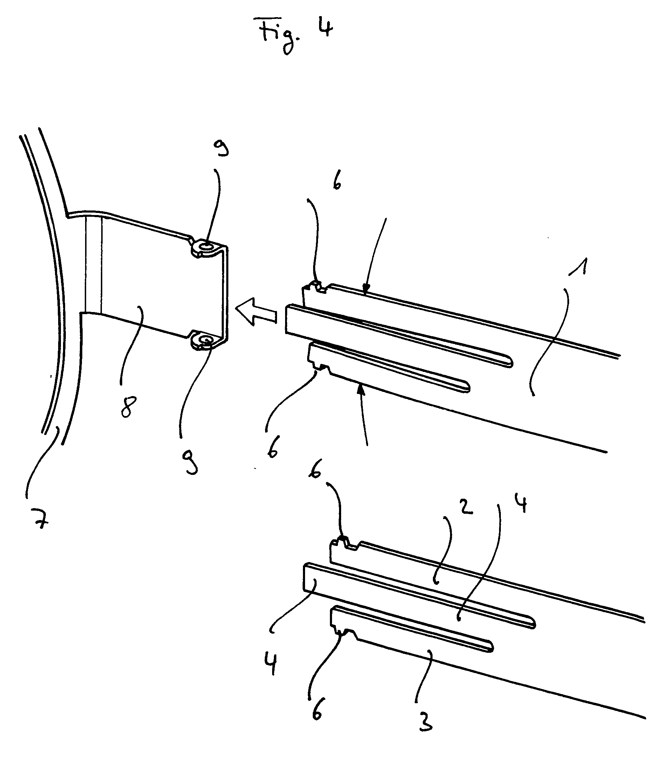

Wie aus Fig. 4 ersichtlich, wird der Bügel 1 auf einfache Weise an dem Anschlusselement 8 dadurch befestigt, dass die äußeren Blattfedem 2 und 3 entgegen der von diesen ausgeübten Federkraft zusammen gedrückt und die Drehzapfen in die Ösen 9 eingefügt werden. Die Federkraft der äußeren Blattfedem 2 und 3 voneinander weg bewirkt, dass die Drehzapfen 6 verliersicher, aber dennoch drehbar in die Ösen 9 einschnappen.

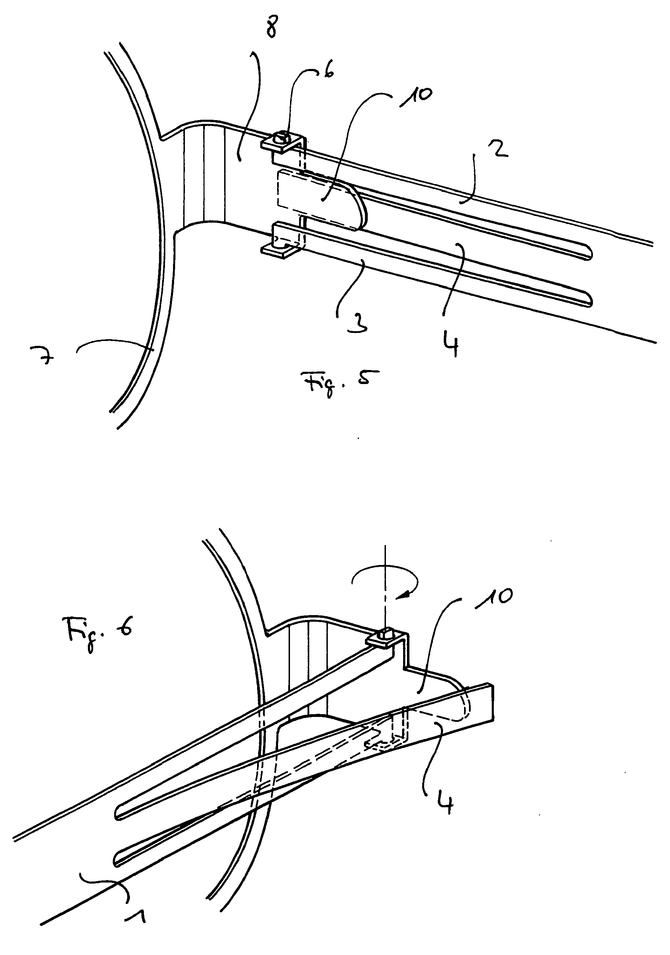

Wie in den Fig. 5 und 6 für ein Brillengestell in einer zweiten Ausführungsform gemäß der Erfindung zu sehen ist, kann das Anschlusselement 8 ein blattförmiges Widerlager 10 aufweisen, welches sich von den Ösen 9 in Richtung zu dem Bügel 1 erstreckt.

Wie in Fig. 5 zu erkennen ist, kommt die mittlere Blattfeder 4 im ausgeklappten Zustand an der dem Brillenträger abgewandten Fläche des Widerlagers 10 zum Anliegen. Beim Einklappen, wie dies die Fig. 6 zeigt, stützt sich die mittlere Blattfeder 4 an dem Widerlager 10 ab, um einen Rückfedermechanismus auszubilden. Das Widerlager 10 ist dabei so geformt, dass die äußeren Blattfedem 2 und 3 ungehindert über das Widerlager 10 beim Einklappen des Bügels 1 hinweg laufen können.

## Patentansprüche

1. Brillengestell mit links und rechts je einem Bügel (1) und mit einer Fassung (7), die links und rechts je ein Anschlusselement (8) aufweist, dessen bügelseitiges Ende in Richtung des Bügels (1) im ausgeklappten Zustand weist, wobei an dem Anschlusselement (8) Gelenkelemente angeordnet sind, welche mit an dem fassungsseitigen Ende des Bügels (1) angeordneten Gelenkelementen unter Ausbildung eines Drehgelenks zusammenwirken,
- wobei das Anschlusselement (8) aus Flachmetall hergestellt ist und die Gelenkelemente als Ösen (9) ausgebildet sind, die aus dem Flachmetall gebogen sind,
- der Bügel (1) an seinem fassungsseitigen Ende drei Blattfedern (2,3,4) aus Flachmetall aufweist und die Gelenkelemente des Bügels (1) als an den äußeren Blattfedem (2,3) angeordnete Zapfen (6) ausgebildet sind, die in die Ösen (9) an dem Anschlusselement (8) eingreifen derart, dass die mittlere Blattfeder (4) im ausgeklappten Zustand des Bügels an der dem Brillenträger abgewandten Fläche des Anschlusselements (8) zum Anliegen kommt, und
- die äußeren Blattfedem (2,3) so ausgebildet sind, dass sie in Richtung der Gelenkachse des Drehgelenks jeweils eine Federkraft ausüben, und die von einer Blattfeder (2 oder 3) ausgeübte Federkraft von der anderen Blattfeder (3 oder 2) weg wirkt.

2. Brillengestell nach Anspruch 1, bei dem das Anschlusselement (8) so ausgebildet ist, dass es ein Widerlager (10) für die mittlere Blattfeder (4) beim Ein- und Ausklappen des Bügels (1) bildet.

3. Brillengestell nach Anspruch 1 oder 2, bei dem die Länge der Blattfedern (2,3,4) des Bügels (1) und die Länge des Widerlagers (10) so gewählt sind, dass die Federkraft zur Erreichung einer verliersicheren Verbindung der Zapfen (6) des Bügels (1) und der Ösen (9) des Anschlusselements (8) ausreicht und darüber hinaus die Blattfederwirkung der Blattfedem (2,3,4) ausreicht, um den Bügel (1) in seinem ein- und ausgeklappten Zustand zu halten.

4. Brillengestell nach einem der vorhergehenden Ansprüche, bei dem sich das Widerlager (10) von den Ösen (9) des Anschlusselements (8) in Richtung zu dem Bügel (1) im ausgeklappten Zustand hin derart erstreckt, dass beim Einklappen des Bügels (1) die äußeren Blattfedem (2,3) des Bügels (1) über das Widerlager (10) hinweg laufen können.

5. Brillengestell nach einem der vorhergehenden Ansprüche, bei dem die Fassung (7) und das Anschlusselement (8) einstückig aus Flachmetall hergestellt sind.
